# EUROPEAN PATENT SPECIFICATION

(11) **EP 1 685 618 B1**
(45) Date of publication and mention of the grant of the patent: **30.09.2009**
(21) Application number: 04803112.4
(22) Date of filing: 05.11.2004
(51) Int. Cl.: H01M 8/10, C08J 5/22, H01M 2/16, H01B 1/12

(54) **ION-CONDUCTING COMPOSITE MEMBRANES**
IONENLEITUNGS-VERBUNDMEMBRANEN
MEMBRANES COMPOSITES CONDUCTRICES D'IONS

(30) Priority: 06.11.2003 EP 03292786
(43) Date of publication of application: 02.08.2006
(73) Proprietor: RENAULT S.A.S., 92100 Boulogne Billancourt (FR)
(72) Inventor: HOCEVAR, Stanko, 1000 Ljubljana (SI); KRZAN, Andrej, 1000 Ljubjana (SI)
(74) Representative: Davies, Owen Robert Treharne
(86) International application number: PCT/EP2004/012629
(87) International publication number: WO 2005/045976

(56) References cited:
- EP-A- 1 309 025
- WO-A-02/47802
- US-A- 6 059 943
- MACFARLANE D R ET AL: "Pyrrolidinium imides: a new family of molten salts and conductive plastic crytal phases" JOURNAL OF PHYSICAL CHEMISTRY. B, MATERIALS, SURFACES, INTERFACES AND BIOPHYSICAL, WASHINGTON, DC, US, vol. 103, no. 20, 20 May 1999 (1999-05-20), pages 4164-4170, XP002211103 ISSN: 1089-5647

## Description

### FIELD OF THE INVENTION

The present invention relates generally to the field of ionically conducting separators and more particularly to methods of fabricating ion-conducting composite membranes and to ion-conducting composite membranes obtainable using such methods, especially in relation to electrochemical devices like fuel cells requiring a proton conductor.

### BACKGROUND OF THE INVENTION

The operation of an electrochemical cell requires the occurrence of oxidation and reduction reactions which produce or consume electrons. In operation, an electrochemical cell is connected to an external load or to an external voltage source and electric charge is transferred by electrons between the anode and the cathode through the external circuit. To complete the electrical circuit through the cell, an additional mechanism must exist for internal charge transfer. This mechanism includes one or more electrolytes, which support charge transfer by ionic conduction. Electrolytes must be poor electronic conductors to prevent internal short circuiting of the cell.

One category of electrolytes particularly suitable for use in conjunction with electrochemical cells are proton exchange membranes (PEM). PEMs usually consist of a polymer matrix to which are attached functional groups capable of exchanging cations or anions. The polymer matrix generally consists of an organic polymer such as polystyrene, polytetrafluoroethylene (PTFE) or other polytetrafluoroethylene (PTFE) analogs. In general, the material is acid with a sulfonic acid group incorporated into the matrix.

The apparent advantages of using PEMs in fuel cells are numerous. The solid electrolyte membrane is simpler and more compact than other types of electrolytes. Also, the use of a PEM instead of a liquid electrolyte offers several advantages, such as simplified fluid management and elimination of the potential of corrosive liquids. In systems using a PEM, the membrane also serves as an electronically insulating separator between the anode and the cathode. However, a number of properties are desirable when using an acid ion exchange membrane as an electrolyte. These include: high ionic conductivity with zero electronic conductivity; low gas permeability; resistance to swelling; minimal water transport; high resistance to dehydration, oxidation, reduction and hydrolysis; a high cation transport number; surface properties allowing easy catalyst bonding; and mechanical strength.

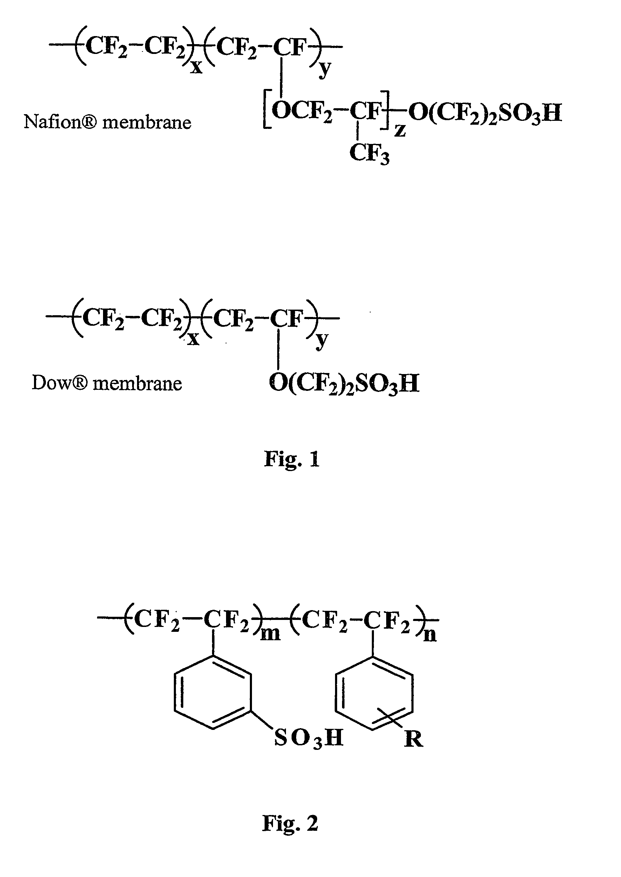

Conventional proton conducting membranes for use in polymer electrolyte membrane (PEM) fuel cells consist of homogeneous polymer films. Figures 1 and 2 are schematic diagrams depicting three examples of homogeneous polymer films used in polymer electrolyte membranes The polymers depicted in Figure 1 were developed at DuPont^{®} and Dow^{®} Chemical Company. These polymers represent a class of compounds known as perfluorosulfonic acids (PFSA). These polymers are fully fluorinated, i.e. all of the sites occupied by hydrogen atoms in a conventional hydrocarbon polymer have been replaced by fluorine atoms. This makes the polymers extremely resistant to chemical attack.

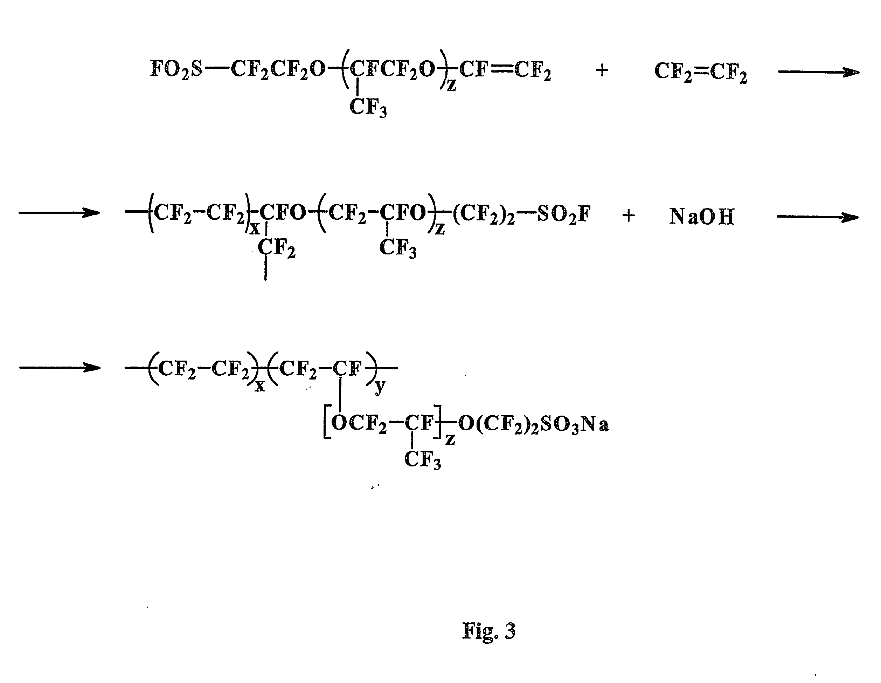

PFSA polymers are generally synthesized by the copolymerization of a derivatized, or active, comonomer with tetrafluoroethylene (TFE), as illustrated in Figure 3. After synthesis, the thermoplastic polymer, which is both hydrophobic and electrochemically inert, is converted into the active ionomer by a base hydrolysis process, as illustrated. The result of this step is an ionomer in its salt form. This can be converted to the proton form by ion-exchange with a strong acid. The sulfonate functionalities (R--SO.sub.3.sup.-) act as the stationary counter charge for the mobile cations (H.sup.+, Li.sup.+, Na.sup.+, etc.) which are generally monovalent.

Another type of polymer, illustrated in Figure 2, is a derivatized trifluorostyrene (TFS), of the type developed by Ballard^{®} Advanced Materials. This polymer has a fully fluorinated backbone, but some of the side chains have hydrogen atoms.

The polymer is synthesized by copolymerizing derivatized and non-derivitized trifluorostyrene monomers. This process also produces an electrochemically inactive thermoplastic. In this system the derivatized monomers create the inert sites while the non-derivatized monomers can be sulfonated. The result of this process is a proton conducting polymer.

Other homogeneous proton conducting polymers are tabulated in Table I. All of these polymers tend to have poor physical properties making them difficult to handle. For example, sheets of the polymers are easily torn or punctured, thereby requiring a minimum usable thickness of about 50 micrometers.

**TABLE I (Other Homogeneous Polymer Electrolytes)**

| Manufacturer | Polymer |
|---|---|
| DAIS Corp. | Sufonated styrene-butadiene block copolymer |
| Maxdem, Inc. | Sufonated polyparaphenylene |
| (Not yet commercial) | Sulfonated side chains radiation grafted to PTFE |

In U.S. Patent 5,547,551 Bahar et. al propose a composite membrane fabricated by filling the void portion of a porous substantially inert polymer membrane with an ionically conducting polymer. This approach starts with a porous membrane fabricated from an inert polymer, such as polytetrafluoroethylene (PTFE) and converts it to an ion conducting membrane by filling the pores with ionomer deposited from solution. This approach seeks thinner membranes, with membranes less than 25 micrometers thick the target. These membranes are more conductive than pure PFSA membranes on a conductivity per unit area basis, but have lower specific conductivities. The advantage of these membranes is their strength. A 25 micrometers membrane produced using this technology is allegedly tougher than a conventional 125 micrometers homogeneous membrane.

In U.S. Patent 5,654,109, Plowman et al. propose an alternate approach to the fabrication of reinforced membranes. In this approach, a core layer of a tough membrane material is clad with surface layers of highly ionically conductive polymer. Typically all of the layers are PFSA type materials, with the core layer having a significantly higher equivalent weight than the surface layers. Although it would seem that the use of a high equivalent weight polymer would significantly impede the proton flux, it has been allegedly experimentally determined that a membrane with a core having an equivalent weight as much as 20% greater than the surface layers exhibits a conductivity equivalent to a solid membrane with the composition of the surface polymer.

In U.S. Patent 6,459,209, Cisar proposes yet another two methods of fabricating composite membranes wherein at least one of the two components is initially provided in the form of precursor. The composite material comprising the precursor is processed to transform the precursor and to obtain a membrane having a desired property.

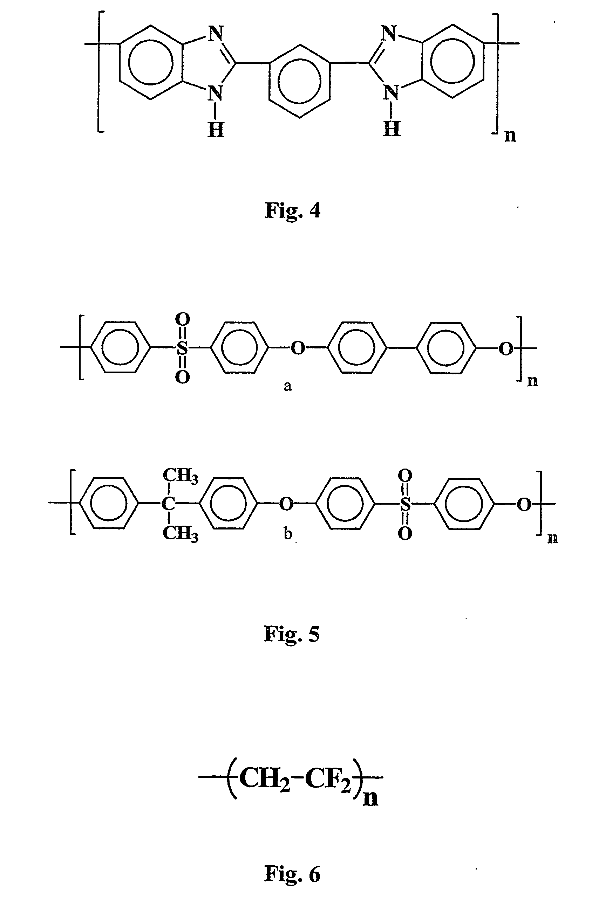

In U.S. Patent 5,525,436, Savinell et al. propose a method of fabricating a solid polymer electrolyte membrane comprising proton conducting polymers stable at temperatures in excess of 100 °C, the polymer being basic polymer complexed with a strong acid or an acid polymer. The proposal further relates to the use of such membranes in electrolytic cells and acid fuel cells. In particular, the alleged invention relates to the use of polybenzimidazole as a suitable polymer electrolyte membrane (Figure 4).

In U.S. Patent 5,919,583, Grot et al. propose the method of fabricating composite membranes comprising polymers with cation exchange groups and inorganic filler, which is a proton conductor selected from the group consisting of particle hydrates and framework hydrates. Such composite membranes allegedly exhibit reduced fuel crossover for fuel cells employing direct feed organic fuels such as methanol.

In U.S. Patents 6,059,943 and 6,387,230, Murphy et al. propose the method of fabricating inorganic-organic composite membranes consisting of a polymeric matrix, which may or may not be an ionic conductor in its unfilled form, filled with an inorganic material having a high affinity for water, capable of exchanging cations such as protons, and preferably with a high cation mobility, either on its surface or through its bulk. The polymeric matrix may contain other polymers like polysulfone (PS) and polyvinylidenefluoride (PVdF), shown in Figures 5 and 6 respectively. The inorganic filler may be, amongst others, heteropolyacid. However, according to the authors, the mixture of heteropolyacid and a resin described as ethylene tetrafluoride powder gives a thick (over 2 mm) and poorly conductive membrane.

In EP-0731519, proton conductors are described that do not contain ionic liquids. The documents discusses only conductivity obtained at room temperature. In the preparation of the membranes concerned by EP-0731519, the Brönsted acids used are water soluble and therefore leachable from the membrane in continuous operation under hydrothermal conditions, e.g. high temperature and steam pressure.

In WO 02/47802, a proton conducting ceramic membrane is described that is infiltrated with an ionic liquid. The conductivity reported in this document was only measured at room temperature and is in the order of 10⁻³ S/cm.

While some of the methods outlined above allegedly allow the fabrication of composite membranes that may present enhanced structural stability and ionic conductivity, the methods used do not allow the flexibility needed in fabricating composite membranes suitable for use in a wide range of applications. Thus there is a continuing need to look for membranes and membrane fabricating processes that allow greater flexibility in controlling the physical properties of the composite membranes.

It is an object of the present invention to provide an improved ionically conducting separator and more particularly to provide an improved method of fabricating composite membranes and to provide composite membranes obtainable using such methods.

### SUMMARY OF THE INVENTION

Accordingly, the present invention provides a method of making an ion-conducting composite membrane, the method including:
a) combining an electronically and ionically non-conducting polymer, or a blend of at least two such polymers, in solution or in the molten state with low melting point salt; and then
b) combining the product obtained from step (a) with hydrolysable organic precursor of silica; and then
c) combining the product of step (b) with compatible organic solvent solution of heteropolyacid; and then
d) casting, from the product of step (c), a membrane as a film, preferably a thin film.

Using the method of the present invention, composite membranes are obtainable that are capable of conducting protons at temperatures up to 473 K in fuel cells operating on gaseous or liquid fuels.

The method may include casting said membrane on an inert support, for example a glass plate. The method may include preparing a said blend of two electronically and ionically non-conducting polymers by dissolving each of the polymers separately in common solvent and then mixing the two solutions in such a way as to obtain homogeneous solution of polymer blend.

The step (a) may include incremental addition of low melting point salt into said polymer solution or melt in such a way as to obtain a homogeneous mixture.

The step (b) may include incremental addition to the product of step (a) of hydrolysable precursor of silica in such a way as to obtain a homogeneous mixture.

The hydrolysable precursor of silica may be added in liquid form.

The step (c) may include incremental addition to the product of step (b) of said heteropolyacid solution in such a way as to obtain a homogeneous liquid solution.

The step (d) may include the use of a moving blade film making machine.

The step (d) may include casting said films with a thickness between 5 and 500 micrometers, preferably on a smooth surface. The smooth surface may comprise a glass plate.

The or each polymer may be selected from the group consisting of; polysulfone (PS), polyethersulfone (PES), polyphenylsulfone (PPS), polyvinylidenedifluoride (PVdF) or polyimide (PI), and mixtures thereof.

Said low melting point salt may comprise a water insoluble salt. Said water insoluble low melting salt may be selected from the families of imidazolium and pyridinium salts. The salt selected from said families may have a melting point close to room temperature, e.g. in the region of 298K.

The hydrolysable organic precursor of silica may be selected from the family of alkoxysilanes. The heteropolyacid may be selected from the family of 12-heteropolyacids.

The present invention also provides an ion-conducting composite membrane comprising nano-scale ion-conducting channels and a polymer matrix containing silica, low melting point salt and Heteropolyacid (HPA), said membrane preferably being obtainable using the method of the present invention.

Said ion-conducting composite membrane may have a thickness between 5 and 500 micrometers.

Said ion-conducting composite membrane may be cast on an inert support, said support preferably comprising a smooth surface such as glass.

Said ion-conducting composite membrane may comprise a member of the group consisting of; polysulfone (PS), polyethersulfone (PES), polyphenylsulfone (PPS), polyvinylidenedifluoride (PVdF) or polyimide (PI), and mixtures thereof.

Said low melting point salt may comprise a water insoluble low melting point salt, said water insoluble low melting salt preferably comprising a member of the families of imidazolium and pyridinium salts and also preferably having a melting point close to room temperature, for example 298 K.

The hydrolysable organic precursor of silica comprises a member of the family of alkoxysilanes. The heteropolyacid may comprise a member of the family of 12-heteropolyacids.

The present invention also provides the use of such a membrane as a proton exchange membrane in a fuel cell. The present invention also provides a fuel cell comprising such a membrane or a membrane obtained using the method of the present invention.

### BRIEF DESCRIPTION OF THE DRAWINGS

The present invention will now be described by way of example only and with reference to the accompanying drawings, in which :
Figures 1 and 2 are schematic diagrams depicting examples of homogenous polymers used in the preparation of polymer electrolyte membranes;
Figure 3 is a preparation scheme for Nafion^{®} in its sodium salt form;
Figure 4 is a schematic diagram of polybenzimidazole;
Figure 5 is a schematic diagram of polysulfone and polyethersulfone;
Figure 6 is a schematic diagram of polyvinylidenefluoride (PVdF); and
Figure 7 is a schematic representation of a composite membrane structure made in accordance with the present invention.

### DETAILED DESCRIPTION OF THE INVENTION

Referring to the drawings, the present invention provides a method of making a composite cation conducting membrane, comprising an oxidation resistant polymeric matrix filled with inorganic oxide particles and low melting point salts forming a connected cation conducting network extending from one face of the membrane to another face of the membrane. In many applications the cations will comprise protons. The inorganic oxide particles may comprise silica, titania and hydrated metal oxide, preferably wherein the metal is selected from molybdenum, tungsten, zirconium and mixtures thereof, and most preferably wherein the inorganic oxide particles are selected from combination of silica and heteropolyacids. The polymeric matrix is preferably non-elastomeric. The polymeric matrix is preferably a synthetic organic polymer having a glass transition temperature greater than about 180 °C, such as polysulfones, polyethersulfones, polyphenylsulfones, polyimides or polyvinylidenedifluoride, and mixtures thereof. The low melting point salts are preferably selected from the families of imidazolium and pyridinium salts.

The cation-conducting composite membranes of the present invention may be made by several processes. One method includes: (a) combining of two electronically and ionically non-conducting polymers in order to obtain a homogeneous solution of polymer blend; (b) combining of polymer melt or solution with low melting point salt in order to obtain a homogeneous mixture; (c) combining of the said homogeneous mixture with the heteropolyacid in order to obtain a homogeneous mixture; (d) forming of said mixture in a form of tape or film of thickness between 5 and 500 micrometers on the appropriate substrate, preferably with a smooth surface.

The composite membranes prepared by the methods described in this invention have good proton conductivity, high thermal stability, high tensile strength, are thin and flexible, have low gas permeability, have low methanol cross-over, and they are durable. The proton conductivity is higher than 1.10⁻² Scm⁻¹ at 160 °C and 100% relative humidity. It may be noted that this level of conductivity is an order of magnitude greater than that suggested in WO 02/47802.

The present invention provides a process of fabricating composite membranes that allows greater flexibility than much of the prior art in adjusting physical properties of the membrane, such as the chemical stability at operating temperatures higher than 373 K, mechanical strength, resistance to swelling, minimal water transport, high resistance to dehydration, and high ionic conductivity. The membranes fabricated by the methods of the invention are composite membranes comprising at least three components. Controlling the proportion of each component in the composite membrane allows for adjusting the physical properties conferred to the composite membrane by the particular component. For example, one component in the composite membrane may be essentially associated with the mechanical strength of the membrane, while another component may be essentially associated with the ionic conductivity properties of the membrane. Yet other components may provide control or influence of other qualities of the membrane. While the present specification focuses on components associated with the tensile strength and ionic conductivity of the composite membrane, the methods of the invention may be readily used in fabricating composite membranes having components associated with other physical or chemical qualities of the membrane. Such methods of fabricating composite membranes are within the scope of the present invention.

One aspect of the invention provides processes of fabricating composite membranes, wherein at least one of the components is initially added to the composition in the form of a precursor. The composition comprising the precursor may then be processed to transform the precursor and obtain a membrane having a desired property. Obtaining an intermediate composition, comprising precursors to one or more components, may provide more flexibility in fabricating composite membranes with properties tailored for use in a particular application.

The properties of the precursor may allow the use of certain processing methods that may otherwise be impractical or difficult to implement. For example, in order to obtain a nanocomposite membrane, it is advantageous to use precursor of a certain membrane component that allows the formation of a homogeneous solution appropriate for film forming and subsequently triggering by physical or chemical methods the in-situ formation of the desired component.

The methods of the invention allow for combining the components in the composite membrane over a wide range of ratios between the components. Depending on the use of the membrane, a certain physical property may be more desirable than the other and the proportions of the components in the membrane may be adjusted to obtain the desired balance between the physical properties provided by each component. For example, in a composite polymer membrane having an inert component and an ion-conducting component, when high ion conductivity is the more desirable quality, the proportion of the ion conducting component may be maximized and the portion of the inert component minimized. Conversely, in applications where the structural properties may be more important, the proportion of the inert component may be maximized and the proportion of the conducting component minimized.

Since the methods of the invention allow intimate mixing of the components in the composite membrane, a component may be able to confer to the composite membrane its qualities even when the component is provided in minimal proportions. The methods of the invention may allow the fabrication of polymer compositions where the proportion of an individual component may vary between approximately 1 wt. % and 99 wt%. For example, in applications, such as fabricating sensing devices where ruggedness may be a more useful property than high conductivity, the amount of the ion conducting component, used in the composite membrane, may be decreased to the minimal proportion capable of producing a continuous network. Conversely, in applications such as the fabrication of power generation devices, where conductivity may be the more desirable property, the amount of inert polymer may be decreased to the smallest proportion capable of conferring to the composite membrane the desired structural integrity.

In PEM fuel cells the membrane electrolyte may be exposed to extremely oxidizing conditions. Not only may one side of the membrane be exposed to air at elevated temperatures, but the fuel cell reactions themselves may produce trace levels of hydrogen peroxide and peroxyl radicals. These compounds are extremely powerful oxidizers that may readily attack hydrocarbons and partially halogenated polymers. Thus it may be highly advantageous to use composite membranes with controlled resistance to oxidation.

Controlling the membrane's resistance to oxidation may be achieved by including in the composite membrane a polymer having high resistance to oxidation and adjusting the proportion of such a polymer to achieve the desired qualities while conserving other qualities such as ionic conductivity, thickness and structural integrity. Polymers, such as polysulfone (PS), polyethersulfone (PES), polyphenylsulfone (PPS), polyvinylidenefluoride (PVdF), and polyimide (PI), are highly resistant to oxidation. Adjusting the proportion of these polymers in a composite membrane may allow better control of the chemical and structural properties of the membrane.

While some membranes based on water-dependent proton conductors, such as PFSA polymers, may have high ionic conductivity, they also have a strong affinity for water and consequently undergo a significant change in size (swelling) when the amount or chemical potential of the water in the environment changes. Controlling the shape of composite membranes comprising a water-dependent proton conductor may be achieved by including in the membrane a component whose shape does not change with the chemical potential of the water contacting the membrane. Further, the processes of the invention may allow the fabrication of composite membranes where the change in the size of one component may be limited by the presence of another component in the membrane.

The composite membranes fabricated by the methods of the invention may comprise a stable polymer matrix, appropriate carriers of proton conductivity, an inert hydrophilic filler. For example, a composite membrane can be film-cast from the homogeneous viscous solution containing a high glass transition temperature polymer, a heteropolyacid, a low melting point organic salt, and a solvolysable Si-containing precursor. After the membrane is formed, the precursor may be transformed into a form allowing the composite membrane to have one or more desired qualities associated with the transformed precursor. For example, a composite membrane may be fabricated by forming self-assembled hydrophilic and hydrophobic regions. The hydrophilic regions, containing Si-precursor and heteropolyacid, may furnish high proton conductivity paths, while the hydrophobic regions, containing polymer and low melting point salt, may form a reinforcing matrix. The methods of the invention comprise film casting using the same techniques that may be used in fabricating some conventional polymer films, e.g. using a moving blade film making machine such as a "Film Applicator" from Erichsen, Germany.

It can be noted, however, the choice of a particular polymer and other components of the composite membrane may be dictated by the type of application in which the composite membrane is intended to be used. For example, when the membrane is used in a fuel cell, it is important that the polymer remain flexible under fuel cell operating conditions and that it retains dimensional stability with changing conditions.

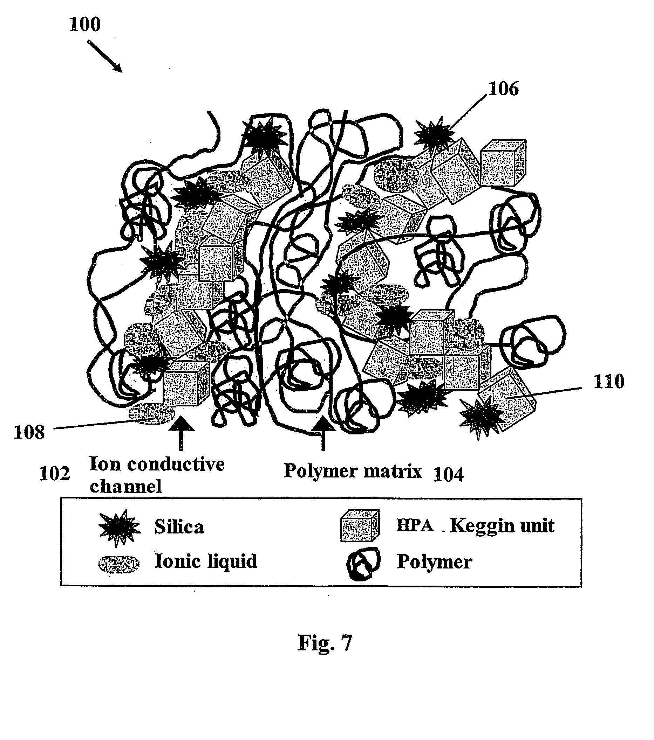

A non-limiting example of a composite membrane 100 obtainable using the method of the present invention is shown with particular reference to Figure 7. The composite membrane 100 forms two domains, preferably on nano-scale: one forming the ion (proton) conductive channels 102 and the other, inert domain, consisting prevalently of polymer matrix 104 which binds together the other three components (silica 106, ionic liquid 108 such as a low melting point salt and Heteropolyacid (HPA) Keggin units 110). Heteropolyacid consists of Keggin structural units, which are bound together in three-dimensional (3D) structure through hydrogen bonds.

The ion-conducting composite membrane may have a thickness between 5 and 500 micrometers. The ion-conducting composite membrane may be cast on an inert support, the support preferably comprising a smooth surface such as glass. The polymer may comprise a member of the group consisting of; polysulfone (PS), polyethersulfone (PES), polyphenylsulfone (PPS), polyvinylidenedifluoride (PVdF) or polyimide (PI), and mixtures thereof. The low melting point salt may comprise a water insoluble low melting point salt, said water insoluble low melting salt preferably comprising a member of the families of imidazolium and pyridinium salts and also preferably having a melting point close to room temperature, for example 298 K. The hydrolysable organic precursor of silica comprises a member of the family of alkoxysilanes. Such a membrane is preferably obtainable using the method of the present invention.

It will be appreciated that composite membranes obtainable and obtained using the method of the present invention may prove useful in fuel cells, in particular for use as proton exchange membranes (PEM).

The examples now presented show aspects of the function of the present invention and some of its preferred embodiments.

### Example 1

6 grams of a 17 wt. % solution of polyvinylidenefluoride (Figure 6) in dimethylformamide were mixed with 0.5 gram of 12-tungstophosphoric acid hydrate, 0.5 gram butyl methyl imidazolium hexafluorophosphate, 3 mililiters of dimethylformamide and 1 mililiter of tetraethoxysilane. The mixture was homogenized to yield a clear viscous solution. The solution was cast on a glass plate and spread with a metal blade with a set film distance of 100 micrometer. The film was allowed to dry at room temperature (e.g. 298K) after which it was removed from the glass plate. Approximately 25 cm² of composite membrane film was then conditioned in 25 cm³ of twice distilled water at 80 - 90 °C for 5 - 6 hours. The thickness of conditioned membrane measured with digital thickness gauge was 30 micrometers. The ionic conductivity measured at 433 K and 100% relative humidity was 3.0·10⁻² Scm⁻¹.

### Example 2

6 grams of a 27 wt. % solution of polyethersulfone in dimethylformamide were mixed with 0.5 gram of 12-tungstophosphoric acid hydrate, 0.5 gram 1-ethyl-3-methyl imidazolium hexafluorophosphate, 2.5 mililiters of dimethylformamide and 1 mililiter of tetraethoxysilane. The mixture was homogenized to yield a clear viscous solution. The solution was cast on a glass plate and spread with a metal blade with a set film distance of 300 micrometer. The film was allowed to dry at room temperature after which it was removed from the glass plate. Approximately 25 cm² of composite membrane film was then conditioned in 25 cm³ of twice distilled water at 80 - 90 °C for 5 - 6 hours and then stored in twice distilled water. The thickness of conditioned membrane measured with digital thickness gauge was 120 micrometers. The ionic conductivity measured at 433 K and 100% relative humidity was 1.4.10⁻² Scm⁻¹.

## Claims

1. A method of making an ion-conducting composite membrane, the method including:
(a) combining an electronically and ionically non-conducting polymer, or a blend of at least two such polymers, in solution or in the molten state with low melting point salt; and then
(b) combining the product obtained from step (a) with hydrolysable organic precursor of silica; and then
(c) combining the product of step (b) with compatible organic solvent solution of heteropolyacid; and then
(d) casting, from the product of step (c), a membrane as a film, preferably a thin film.

2. The method of claim 1, including casting said membrane on an inert support.

3. The method of claim 1 or claim 2, including preparing a said blend of two electronically and ionically non-conducting polymers by dissolving each of the polymers separately in common solvent and then mixing the two solutions in such a way as to obtain homogeneous solution of polymer blend.

4. The method of any preceding claim, wherein the step (a) includes incremental addition of low melting point salt into said polymer solution or melt in such a way as to obtain a homogeneous mixture.

5. The method of any preceding claim, wherein the step (b) includes incremental addition to the product of step (a) of hydrolysable precursor of silica in such a way as to obtain a homogeneous mixture.

6. The method of claim 5, wherein the hydrolysable precursor of silica is added in liquid form.

7. The method of any preceding claim, wherein the step (c) includes incremental addition to the product of step (b) of said heteropolyacid solution in such a way as to obtain a homogeneous liquid solution.

8. The method of any preceding claim, wherein the step (d) includes the use of a moving blade film making machine.

9. The method of any preceding claim, wherein the step (d) includes casting said films with a thickness between 5 and 500 micrometers, preferably on a smooth surface.

10. The method of any preceding claim, wherein the or each polymer is selected from the group consisting of; polysulfone (PS), polyethersulfone (PES), polyphenylsulfone (PPS), polyvinylidenedifluoride (PVdF) or polyimide (PI), and mixtures thereof.

11. The method of any preceding claim, wherein said low melting point salt is water insoluble.

12. The method of claim 11, wherein said water insoluble low melting point salt is selected from the families of imidazolium and pyridinium salts.

13. The method according to claim 12, wherein the low melting point salt selected from said families has a melting point close to room temperature, for example 298 K.

14. The method of any preceding claim, wherein the hydrolysable organic precursor of silica is selected from the family of alkoxysilanes.

15. The method of any preceding claim, wherein the heteropolyacid is selected from the family of 12-heteropolyacids.

16. An ion-conducting composite membrane (100) comprising ion-conducting channels and a polymer matrix containing silica (106), low melting point salt (108) and Heteropolyacid (HPA):

17. An ion-conducting composite membrane (100) according to claim 16, wherein said ion-conducting channels comprise nano-scale ion-conducting channels.

18. An ion-conducting composite membrane (i00) according to claim 16 or claim 17, having a thickness between 5 and 500 micrometers.

19. An ion-conducting composite membrane (100) according to any one of claims 16 to 18, wherein the or each polymer comprises a member of the group consisting of; polysulfone (PS), polyethersulfone (PES), polyphenylsulfone (PPS), polyvinylidenedifluoride (PVdF) or polyimide (PI), and mixtures thereof.

20. An ion-conducting composite membrane (100) according to any one of claims 16 to 19, wherein said low melting point salt comprises a water insoluble low melting point salt, said water insoluble low melting salt preferably comprising a member of the families of imidazolium and pyridinium salts and also preferably having a melting point close to room temperature, for example 298 K.

21. An ion-conducting composite membrane (100) according to any one of claims 16 to 20, wherein the hydrolysable organic precursor of silica comprises a member of the family of alkoxysilanes.

22. An ion-conducting composite membrane (100) according to any one of claims 16 to 21, wherein the heteropolyacid comprises a member of the family of 12-heteropolyacids.

23. Use of a membrane according to any one of claims 16 to 22 as a proton exchange membrane in a fuel cell.

24. A fuel cell comprising a membrane according to claim 23.

## Patentansprüche

1. Verfahren zur Herstellung einer ionenleitenden Verbundmembran, bei dem man:
(a) ein elektronisch und ionisch nichtleitendes Polymer oder eine Mischung von mindestens zwei derartigen Polymeren in Lösung oder in geschmolzenem Zustand mit einem niedrigschmelzenden Salz kombiniert und dann
(b) das aus Schritt (a) erhaltene Produkt mit einem hydrolysierbaren organischen Siliciumdioxidvorläufer kombiniert und dann
(c) das Produkt aus Schritt (b) mit einer Lösung einer Heteropolysäure in einem kompatiblen organischen Lösungsmittel kombiniert und dann
(d) aus dem Produkt aus Schritt (c) eine Membran als Film, vorzugsweise dünner Film, gießt.

2. Verfahren nach Anspruch 1, bei dem man die Membran auf einen inerten Träger gießt.

3. Verfahren nach Anspruch 1 oder Anspruch 2, bei dem man eine Mischung von zwei elektronisch und ionisch nichtleitenden Polymeren herstellt, indem man jedes der Polymere separat in einem gemeinsamen Lösungsmittel löst und dann die beiden Lösungen so vermischt, daß man eine homogene Lösung der Polymermischung enthält.

4. Verfahren nach einem der vorhergehenden Ansprüche, bei dem man in Schritt (a) niedrigschmelzendes Salz inkrementell so zu der Polymerlösung oder -schmelze gibt, daß man eine homogene Mischung erhält.

5. Verfahren nach einem der vorhergehenden Ansprüche, bei dem man in Schritt (b) das Produkt aus Schritt (a) inkrementell so mit dem hydrolysierbaren Siliciumdioxidvorläufer versetzt, daß man eine homogene Mischung erhält.

6. Verfahren nach Anspruch 5, bei dem man den hydrolysierbaren Siliciumdioxidvorläufer in flüssiger Form zugibt.

7. Verfahren nach einem der vorhergehenden Ansprüche, bei dem man in Schritt (c) das Produkt aus Schritt (b) inkrementell so mit der Heteropolysäurelösung versetzt, daß man eine homogene Mischung erhält.

8. Verfahren nach einem der vorhergehenden Ansprüche, bei dem man in Schritt (d) eine Filmherstellungsmaschine mit beweglicher Rakel verwendet.

9. Verfahren nach einem der vorhergehenden Ansprüche, bei dem man in Schritt (d) die Filme mit einer Dicke zwischen 5 und 500 Mikrometer gießt, vorzugsweise auf einer glatten Oberfläche.

10. Verfahren nach einem der vorhergehenden Ansprüche, bei dem man das oder jedes Polymer aus der Gruppe bestehend aus Polysulfon (PS), Polyethersulfon (PES), Polyphenylsulfon (PPS), Polyvinylidendifluorid (PVdF) oder Polyimid (PI) und Mischungen davon auswählt.

11. Verfahren nach einem der vorhergehenden Ansprüche, bei dem das niedrigschmelzende Salz wasserunlöslich ist.

12. Verfahren nach Anspruch 11, bei dem man das niedrigschmelzende Salz aus den Familien der Imidazolium- und Pyridiniumsalze auswählt.

13. Verfahren nach Anspruch 12, bei dem das aus den Familien ausgewählte niedrigschmelzende Salz einen Schmelzpunkt in der Nähe von Raumtemperatur, beispielsweise 298 K, aufweist.

14. Verfahren nach einem der vorhergehenden Ansprüche, bei dem man den hydrolysierbaren Siliciumdioxidvorläufer aus der Familie der Alkoxysilane auswählt.

15. Verfahren nach einem der vorhergehenden Ansprüche, bei dem man die Heteropolysäure aus der Familie der 12-Heteropolysäuren auswählt.

16. Ionenleitende Verbundmembran (100) mit ionenleitenden Kanälen und einer Siliciumdioxid (106), niedrigschmelzendes Salz (108) und Heteropolysäure (HPA) enthaltenden Polymermatrix.

17. Ionenleitende Verbundmembran (100) nach Anspruch 16, wobei die ionenleitenden Kanäle nanoskalige ionenleitende Kanäle umfassen.

18. Ionenleitende Verbundmembran (100) nach Anspruch 16 oder 17 mit einer Dicke zwischen 5 und 500 Mikrometer.

19. Ionenleitende Verbundmembran (100) nach einem der Ansprüche 16 bis 18, wobei das oder jedes Polymer ein Mitglied der Gruppe bestehend aus Polysulfon (PS), Polyethersulfon (PES), Polyphenylsulfon (PPS), Polyvinylidendifluorid (PVdF) oder Polyimid (PI) und Mischungen davon umfaßt.

20. Ionenleitende Verbundmembran (100) nach einem der Ansprüche 16 bis 19, wobei das niedrigschmelzende Salz ein wasserunlösliches niedrigschmelzendes Salz umfaßt, wobei das wasserunlösliche niedrigschmelzende Salz vorzugsweise ein Mitglied der Familien der Imidazolium- und Pyridiniumsalze umfaßt und auch vorzugsweise einen Schmelzpunkt in der Nähe von Raumtemperatur, beispielsweise 298 K, aufweist.

21. Ionenleitende Verbundmembran (100) nach einem der Ansprüche 16 bis 20, wobei der hydrolysierbare Siliciumdioxidvorläufer ein Mitglied der Familie der Alkoxysilane umfaßt.

22. Ionenleitende Verbundmembran (100) nach einem der Ansprüche 16 bis 21, wobei die Heteropolysäure ein Mitglied der Familie der 12-Heteropolysäuren umfaßt.

23. Verwendung einer Membran nach einem der Ansprüche 16 bis 22 als Protonenaustauschmembran in einer Brennstoffzelle.

24. Brennstoffzelle mit einer Membran nach Anspruch 23.

## Revendications

1. Procédé de fabrication d'une membrane composite conductrice d'ions, le procédé comprenant :
(a) la combinaison d'un polymère électroniquement et ioniquement non conducteur, ou d'un mélange d'au moins deux tels polymères, en solution ou à l'état fondu, avec un sel à bas point de fusion ; puis
(b) la combinaison du produit obtenu à l'étape (a) avec un précurseur organique hydrolysable de silice ; puis
(c) la combinaison du produit de l'étape (b) avec une solution en solvant organique compatible d'un hétéropolyacide ; puis
(d) la coulée, à partir du produit de l'étape (c), d'une membrane sous la forme d'un film, de préférence un film mince.

2. Procédé selon la revendication 1, comprenant la coulée de ladite membrane sur un support inerte.

3. Procédé selon la revendication 1 ou la revendication 2, comprenant la préparation dudit mélange de deux polymères électroniquement et ioniquement non conducteurs en dissolvant chacun des polymères séparément dans un solvant commun puis en mélangeant les deux solutions de manière à obtenir une solution homogène du mélange de polymères.

4. Procédé selon l'une quelconque des revendications précédentes, dans lequel l'étape (a) comprend l'addition progressive d'un sel à bas point de fusion dans ladite solution ou masse fondue de polymère de manière à obtenir un mélange homogène.

5. Procédé selon l'une quelconque des revendications précédentes, dans lequel l'étape (b) comprend l'addition progressive au produit de l'étape (a) d'un précurseur hydrolysable de silice de manière à obtenir un mélange homogène.

6. Procédé selon la revendication 5, dans lequel le précurseur hydrolysable de silice est ajouté sous forme liquide.

7. Procédé selon l'une quelconque des revendications précédentes, dans lequel l'étape (c) comprend l'addition progressive au produit de l'étape (b) de ladite solution d'hétéropolyacide de manière à obtenir une solution liquide homogène.

8. Procédé selon l'une quelconque des revendications précédentes, dans lequel l'étape (d) comprend l'utilisation d'une machine de fabrication de film à lame mobile.

9. Procédé selon l'une quelconque des revendications précédentes, dans lequel l'étape (d) comprend la coulée dudit film à une épaisseur comprise entre 5 et 500 micromètres, de préférence sur une surface lisse.

10. Procédé selon l'une quelconque des revendications précédentes, dans lequel le ou chaque polymère est choisi dans le groupe constitué par : les polysulfones (PS), les polyéthersulfones (PES), les polyphénylsulfones (PPS), le poly(difluorure de vinylidène) (PVdF), les polyimides (PI), et les mélanges de ceux-ci.

11. Procédé selon l'une quelconque des revendications précédentes, dans lequel ledit sel à bas point de fusion est insoluble dans l'eau.

12. Procédé selon la revendication 11, dans lequel ledit sel à bas point de fusion insoluble dans l'eau est choisi dans les familles des sels d'imidazolium et de pyridinium.

13. Procédé selon la revendication 12, dans lequel le sel à bas point de fusion choisi dans lesdites familles a un point de fusion proche de la température ambiante, par exemple 298 K.

14. Procédé selon l'une quelconque des revendications précédentes, dans lequel le précurseur organique hydrolysable de silice est choisi dans la famille des alcoxysilanes.

15. Procédé selon l'une quelconque des revendications précédentes, dans lequel l'hétéropolyacide est choisi dans la famille des 12-hétéropolyacides.

16. Membrane composite conductrice d'ions (100) comprenant des canaux conducteurs d'ions et une matrice polymère contenant de la silice (106), un sel à bas point de fusion (108) et un hétéropolyacide (HPA).

17. Membrane composite conductrice d'ions (100) selon la revendication 16, dans laquelle lesdits canaux conducteurs d'ions comprennent des canaux conducteurs d'ions à l'échelle nanométrique.

18. Membrane composite conductrice d'ions (100) selon la revendication 16 ou la revendication 17, ayant une épaisseur comprise entre 5 et 500 micromètres.

19. Membrane composite conductrice d'ions (100) selon l'une quelconque des revendications 16 à 18, dans laquelle le ou chaque polymère comprend un membre du groupe constitué par : les polysulfones (PS), les polyéthersulfones (PES), les polyphénylsulfones (PPS), le poly(difluorure de vinylidène) (PVdF), les polyimides (PI), et les mélanges de ceux-ci.

20. Membrane composite conductrice d'ions (100) selon l'une quelconque des revendications 16 à 19, dans laquelle ledit sel à bas point de fusion comprend un sel à bas point de fusion insoluble dans l'eau, ledit sel à bas point de fusion insoluble dans l'eau comprenant de préférence un membre des familles des sels d'imidazolium et de pyridinium et ayant également de préférence un point de fusion proche de la température ambiante, par exemple 298 K.

21. Membrane composite conductrice d'ions (100) selon l'une quelconque des revendications 16 à 20, dans laquelle le précurseur organique hydrolysable de silice comprend un membre de la famille des alcoxysilanes.

22. Membrane composite conductrice d'ions (100) selon l'une quelconque des revendications 16 à 21, dans laquelle l'hétéropolyacide comprend un membre de la famille des 12-hétéropolyacides.

23. Utilisation d'une membrane selon l'une quelconque des revendications 16 à 22 comme membrane échangeuse de protons dans une pile à combustible.

24. Pile à combustible comprenant une membrane selon la revendication 23.
